# EUROPEAN PATENT APPLICATION

(11) **EP 4 071 105 A1**
(43) Date of publication of application: **12.10.2022**
(21) Application number: 22166897.3
(22) Date of filing: 06.04.2022
(51) Int. Cl.: C01B 3/38, B01D 53/62, C01B 3/50, F25J 1/00, F28D 20/00, F28F 21/04

(54) **PLANT AND PROCESS FOR PRODUCING HYDROGEN BY REFORMING OF A RAW MATERIAL CONTAINING METHANE**

(30) Priority: 06.04.2021 IT 202100008525
(71) Applicant: Sites S.r.l. Societa' Impianti Termici Elettrici E Strumentali, 22070 Fenegro' (CO) (IT)
(72) Inventor: DELL'ACQUA, Vittorio, 22070 FENEGRO' (CO) (IT)
(74) Representative: Robba, Pierpaolo

(57) **Abstract**

Plant (10) for producing hydrogen (H2) by reforming a methane-containing feedstock and water vapor, said plant comprising a combustion unit (11) including at least one burner and having an inlet (13) for a mixture of incoming gases (Fi) and an outlet (15) for the exit of a heating gas (Fc) generated by the combustion unit (11); a reforming reactor (17) provided with corresponding inlets (19, 21) for said heating gas (Fc) and for a flow of reaction gas (Fr) comprising a methane-containing feedstock and water vapor, respectively, wherein said reactor (17) comprises at least one catalyst (27) capable of generating a syngas (F_{GS}) from said flow of reaction gas (Fr) by absorbing heat from the heating gas (C) and is provided with corresponding outlets (23, 25) for the heating gas (Fc) and the syngas (F_{GS}), respectively; cooling means (39, F_{H2O}) capable of cooling down the syngas (F_{GS}) exiting said reforming reactor (17) in order to bring said syngas to a temperature suitable for a subsequent treatment step; at least one shift reactor (41) arranged downstream of said reforming reactor (17) and provided in turn with an inlet (40) for said cooled syngas (F_{GS}), said shift reactor (41) comprising a catalyst for transforming said syngas (F_{GS}) into a gas flow (F_{OUT}) containing carbon dioxide and hydrogen; carbon dioxide separation means (47) arranged downstream of the shift reactor (41) for extracting the carbon dioxide contained in said gas flow (F_{OUT}) exiting the shift reactor (41), in order to obtain a hydrogen flow (F_{H2}) and a carbon dioxide flow (F_{CO2}), wherein said reforming reactor (17) comprises heat storage means (29) made of a ceramic material and capable of absorbing and storing heat from the heating gas (Fc) produced by the combustion unit, in order to supply calories for the reforming reaction taking place in said reforming reactor (17).

## Description

### Technical Field

The present invention relates to a plant and a process for producing hydrogen (H2) by reforming of a methane (CH4)- containing feedstock, such as, for example, natural gas and liquefied natural gas (LNG), and water vapor (H2O). More particularly, the present invention relates to a highly energy-efficient, small-sized plant as well as to a method for producing hydrogen (H2), preferably for use as a fuel in fuel cells.

### Prior Art

In the field of the production of hydrogen (H2), the use of processes of reforming starting from a feedstock containing hydrocarbons is widespread. One of the main sources exploited in the production of hydrogen (H2) is natural gas, whose main component is methane (CH4). Plants comprising reforming reactors are therefore known, whose operation is mainly based on the reforming reaction with steam, or simply reforming reaction, or steam reforming. Such reforming process consists in reacting a hydrocarbon-based feedstock, usually containing methane (CH4), and water vapor (H2O) at a temperature around 700-1100 °C, for producing a synthesis gas known as syngas. Syngas is a mixture mainly consisting of carbon monoxide (CO) and hydrogen (H2). The reforming reaction is a strongly endothermic reaction and therefore it requires high-temperature heat for carrying out the reforming process. The calories required for this endothermic reaction are usually supplied by using one or more burners. From this reforming process, hydrogen (H2) can further be obtained starting from carbon monoxide (CO), by means of a water-gas shift (WGS) reaction. The shift reaction is, instead, an exothermic reaction, which takes place at low temperatures, for example of 200-400°C. By means of the shift reaction, which is effected by using shift reactors operating at low temperatures, transformation of carbon monoxide into carbon dioxide is obtained, which carbon dioxide is then removed in order to increase the concentration of hydrogen (H2).

However, currently known plants using the process of reforming of a methane (CH4)-containing feedstock with water vapor have a series of drawbacks.

A first drawback lies in that the reforming reaction, being a strongly endothermic reaction, requires high operating temperatures. In practice, the reforming process takes place at temperatures of about 800-950°C. In order to ensure the necessary temperature for the reforming reaction, reforming reactors comprising a catalyst and a series of heat exchangers, known as shell and tube reactors, are currently used to facilitate the heat exchange between the flame of a burner associated with shell and tube reactors and the catalyst. In these known reactors, the parameter facilitating the heat exchange is the length of the tubes, which involves increased costs and increased dimensions of the reactor. In addition, ensuring the necessary temperature for supporting the endothermic reaction when using such reforming reactors results in remarkable energy consumption and strong environmental impact.

Another drawback resulting from the high temperatures required for the endothermic reforming reaction arises when the reforming reactor is activated after having been shut down. In fact, in this case the time required to reach the necessary temperature for the reaction is particularly long. Therefore, the production of hydrogen cannot be started immediately, but will require time and therefore energy to resume operation.

A further drawback of current plants using the process of reforming and water vapor for producing hydrogen (H2) is the amount of carbon black or coke generated in the process. Carbon black, or coke, generated in the reforming process, may damage the plant and cause pollution of the catalyst. In addition, the carbon black or coke released into the environment has a strong impact on global pollution.

Not the least drawback of current hydrogen production plants is the complexity of such plants.

Currently known plants cannot usually produce hydrogen in real time for meeting the users' needs in real time. Usually, therefore, the hydrogen produced is then stored in dedicated cylinders or tanks for being then transported where and when necessary. The storage and transport of hydrogen, because of the danger due to the risk of explosions, require particular attention and, for this reason, the need is felt in the field to have small-sized plants, able to produce hydrogen according to the users' needs directly at the place of use.

Such small-sized plants can be associated with the natural gas distribution network and supply hydrogen directly *in situ* according to the users' demands, thus avoiding all the problems related to hydrogen storage and transport, which are particularly dangerous.

The object of the present invention is therefore to provide a plant and a process for producing hydrogen by reforming of a methane-containing feedstock and steam that do not have the prior art drawbacks.

Another object of the present invention is to provide a plant for hydrogen production that can carry out the reforming process continuously and in a highly energy-efficient manner, preferably without formation of process-derived carbon black or coke.

Another object of the invention is to provide a plant for hydrogen production that can produce hydrogen according to the users' needs and does not require storage of the hydrogen produced and works continuously as an actual hydrogen distributor. In particular, the object of the present invention is to provide a plant that can produce hydrogen in real time and can operate according to hydrogen delivery requirements.

A still further object of the invention is to provide a plant that can produce hydrogen *in situ*, i.e. a plant that can be placed alongside natural gas network distribution points.

Not least object of the invention is to provide a plant, preferably a small-sized plant, for hydrogen production that can be made industrially at low cost.

These and other objects are achieved with the plant and the method for producing hydrogen by steam reforming as claimed in the appended claims.

### Summary of the Invention

The plant for producing hydrogen (H2) by reforming a methane-containing feedstock with water vapor according to the invention comprises a combustion unit having a corresponding inlet for a mixture of incoming gases or fuel as well as with a corresponding outlet for the exit of a heating gas generated by the combustion unit. The combustion unit comprises at least one burner for burning the mixture of incoming gases in order to produce a heating gas.

According to the invention, the plant further comprises at least one reforming reactor provided with corresponding inlets for the heating gas coming from the combustion unit and for a gas flow comprising a methane-containing feedstock and water vapor, respectively. Preferably, the methane-containing feedstock consists of natural gas (CH4) or liquid methane (LNG). Preferably, water vapor is added together with the methane-containing feedstock through the corresponding inlet provided in the reforming reactor.

The heating gas has a high temperature, preferably between 900°C and 950°C, in order to provide the necessary heat for activating the reforming reaction in the reforming reactor.

The reforming reactor comprises at least one catalyst and is capable of generating a syngas by absorbing heat from the combustion gas. In addition, the reforming reactor is provided with corresponding outlets for the heating gas and the syngas obtained from the reforming reaction, respectively. The synthesis gas, known as syngas, is a mixture essentially consisting of carbon monoxide and hydrogen.

Advantageously, according to the invention, the reforming reactor comprises heat storage means made of a ceramic material and capable of absorbing and storing heat from the heating gas produced by the combustion unit, in order to supply calories for the reforming reaction taking place in said reforming reactor.

The reaction of reforming the gas flow comprising the methane-containing feedstock and water vapor is a strongly endothermic reaction, which requires high temperatures. Thanks to the fact that the reforming reactor comprises heat storage means made of a ceramic material, it is possible to absorb and store heat from the heating gas in order to supply calories to the reforming reactor, according to the needs of the reforming reaction. Accordingly, the heat storage means made of a ceramic material perform the function of a thermal flywheel. Thanks to the fact that the reforming reactor comprises heat storage means, the plant is immediately operative, even after the heating gas flow has been stopped for a time of up to 10 hours. Once a maximum time of 10 hours has elapsed, the reforming reactor will again be supplied with the heating gas flow, at least for a time of about 5 minutes, in order to bring it back to the temperature levels necessary for the reforming reaction.

Preferably, the corresponding inlets for the gas flow comprising the methane-containing feedstock and water vapor and for the heating gas, respectively, are arranged in a counter-current manner, i.e. the inlet for the heating gas is arranged at a first end of the reactor and the inlet for the gas flow consisting of the methane-containing feedstock and water vapor is arranged at a second end, opposite to the first end, of the reforming reactor. Preferably, the reactor has an elongated shape and the outlet for the syngas is arranged at the first end of the reforming reactor, whereas the outlet for the heating gas is arranged at the second end of the reactor.

Preferably, the catalyst is arranged near the first end of the reactor, and the heat storage means are arranged near the second end of the reactor, whereby the heating gas upon entering the reforming reactor heats first the catalyst and thereafter it heats the heat storage means made of a ceramic material.

Preferably, the heat storage means made of a ceramic material comprise ceramic masses with high thermal inertia in the form of bricks. More preferably, such bricks are micro-perforated in order to allow the passage of gases. According to the invention, preferably, the bricks have a parallelepiped shape, preferably with a rectangular base, with width and length of about 150 mm and with height of about 300 mm. Each brick comprises about 2500 rectangular holes with width and length of about 2 mm. Preferably, the thickness of the walls between adjacent holes is about 1 mm.

Advantageously, according to the invention, the reforming reactor comprises a reaction temperature control system including a plurality of temperature sensors associated along a direction of travel of the heating gas in the reforming reactor, and a dedicated electronic control unit. The electronic control unit is programmed to compare the temperature values detected by said sensors and control the operation of the combustion unit as well as to introduce the gas flow comprising the methane-containing feedstock and water vapor into the reforming reactor.

Thanks to the fact that the reforming reactor comprises a temperature control system, it is possible to control the reaction temperature at specific locations in the reforming reactor and keep it within predetermined temperature ranges in order to prevent formation of carbon black or coke. Preferably, the reaction temperature is controlled so as to have a temperature range between 850°C and 890°C, and more preferably the reaction temperature will be kept around approximately 870°C.

The plant according to the invention comprises cooling means adapted to cool down the syngas exiting the reforming reactor, in order to bring it to a temperature suitable for a subsequent treatment step.

The plant according to the invention further comprises at least one shift reactor arranged downstream of the reforming reactor and provided in turn with an inlet for the syngas cooled by the cooling means. The shift reactor comprises at least one catalyst for carrying out a shift reaction, or water-gas shift reaction, in order to transform the syngas into a gaseous mixture containing carbon dioxide and hydrogen.

According to a preferred embodiment of the invention, the plant comprises two shift reactors arranged in series, downstream of the reforming reactor, in order to carry out a succession of stages, or shift reactions, or water-gas shift reactions, namely: a first shift reactor comprising a first catalyst operating at a temperature of about 400°C and a second shift reactor arranged in series downstream of the first shift reactor and comprising a second catalyst operating at a temperature of about 200°C.

Preferably, the plant comprises a further reactor arranged in series downstream of the second shift reactor and comprising a catalyst for removing traces of carbon monoxide left after the shift reaction.

The plant according to the invention further comprises first carbon dioxide separation means arranged downstream of the shift reactor for extracting the carbon dioxide contained in said gas flow exiting the shift reactor in order to obtain a hydrogen flow and a carbon dioxide flow.

Preferably, the plant further comprises second carbon dioxide separation means for extracting the carbon dioxide contained in the flow of heating gas exiting the reforming reactor.

Advantageously, the plant according to the invention comprises at least one heat exchanger capable of heating and vaporizing a water flow coming from a plant for water treatment by osmosis, in order to produce water vapor to be introduced into the reforming reactor. Preferably, the heat exchanger capable of heating and vaporizing water is a condensation heat exchanger capable of recovering heat up to a temperature of about 30°C. Thanks to the fact that the plant comprises at least one heat exchanger for producing water vapor to be introduced into the reforming reactor, and by virtue of the heat exchange effected by the reforming reactor by means of the heat storage means, it is possible to enhance the energy efficiency of the whole plant.

Advantageously, according to a preferred embodiment of the invention, the plant comprises at least two reforming reactors, namely a first and a second reactor, arranged in parallel, downstream of the combustion unit, wherein said reforming reactors are configured each to carry out at least two working configurations that are carried out alternately in order to facilitate a continuous reforming process.

The working configurations carried out by each reforming reactor are: a first working configuration, or heating configuration, in which the reactor receives the heating gas from the combustion unit and is heated by absorbing and storing the heat of the heating gas, and a second operating configuration, or reforming configuration, in which the heating gas flow is preferably stopped and the reactor is fed, preferably in a counter-current manner, with the gas flow comprising the methane-containing feedstock and water vapor in order to carry out the reforming reaction.

In particular, in this specific embodiment of the invention, while the first reforming reactor receives the heating gas and starts storing heat in order to reach the necessary temperatures for the reforming reaction, the second reforming reaction carries out the reforming reaction. Vice versa, when the first reactor that has completed the heating step is ready to receive the methane-containing gas flow and water vapor and to carry out the reforming reaction, the second reactor which has carried out the reforming reaction has cooled down, whereby the heating gas flow is deviated into the second reactor in order to heat it up for making it available again for a reforming reaction.

Thanks to control means, such as, for example valves, provided for the various flows entering and exiting the reforming reactors and combustion units, and thanks to the temperature control system equipping the reforming reactors, it is possible to control the operation of the reforming reactors in order to ensure continuous operation of the reforming process.

According to this embodiment, between the two working configurations of each reactor there is provided a transient time interval of few seconds in order to carry out a washing or flushing step, i.e. an operation of removing hydrogen contaminants, such as, for example, nitrogen, contained in the combustion gas. The flushing operation is carried out by acting on the control means, or valves, arranged at the first end of each reactor, in order to deviate the syngas containing hydrogen and carbon monoxide produced by the reactor that is in the reforming configuration, into the reactor that has completed the heating step. Each reforming reactor further comprises a device capable of detecting the absence of nitrogen in the corresponding reactor and therefore terminating the flushing operation.

The plant further comprises a series of condensation heat exchangers adapted to recover the calories that are still contained in the gas flows obtained after the shift reaction and in the heating gas flow. Advantageously, in this way, all the energy resources of the plant are recovered and used and energy waste is reduced, thus enhancing the energy efficiency of the whole plant.

The invention further relates to a process for producing hydrogen by reforming a methane-comprising feedstock and water vapor, said process comprising the steps of:
- supplying a gaseous fuel mixture to a combustion unit provided with at least one burner in order to produce a heating gas;
- introducing said heating gas into at least one reforming reactor associated with the outlet of the combustion unit in order to provide the heating required to activate the reforming reaction in said reforming reactor;
- introducing a gas flow comprising a methane-containing feedstock and water vapor into the reforming reactor and reacting said methane-containing feedstock with the water vapor in order to obtain a syngas;
- cooling down the syngas to bring it to a temperature suitable for introduction into at least one shift reactor adapted to carry out a shift reaction or water-gas shift reaction;
- subjecting the syngas to at least one stage of a shift or water-gas shift reaction inside the shift reactor in order to transform the syngas into a gas flow containing carbon dioxide and hydrogen;
- extracting, by means of carbon dioxide separation means, the carbon dioxide from the gas flow obtained from the shift reaction, in order to obtain a hydrogen flow exiting the plant.

Advantageously, according to the invention, in the step of introducing the gas flow into the reforming reactor there is provided a step of absorbing and storing the heat coming from the heating gas and step of controlling the temperature in the reforming reactor, in order to ensure an optimal temperature for the reforming reaction.

### Brief Description of the Drawings

A preferred embodiment of the invention will be described by way of non-limiting example with reference to the annexed Figures, in which:
- Fig. 1 shows a preferred embodiment of the plant for producing hydrogen according to the invention;
- Fig. 2 shows a detail of the plant of Fig.1.

### Description of Some Preferred Embodiments

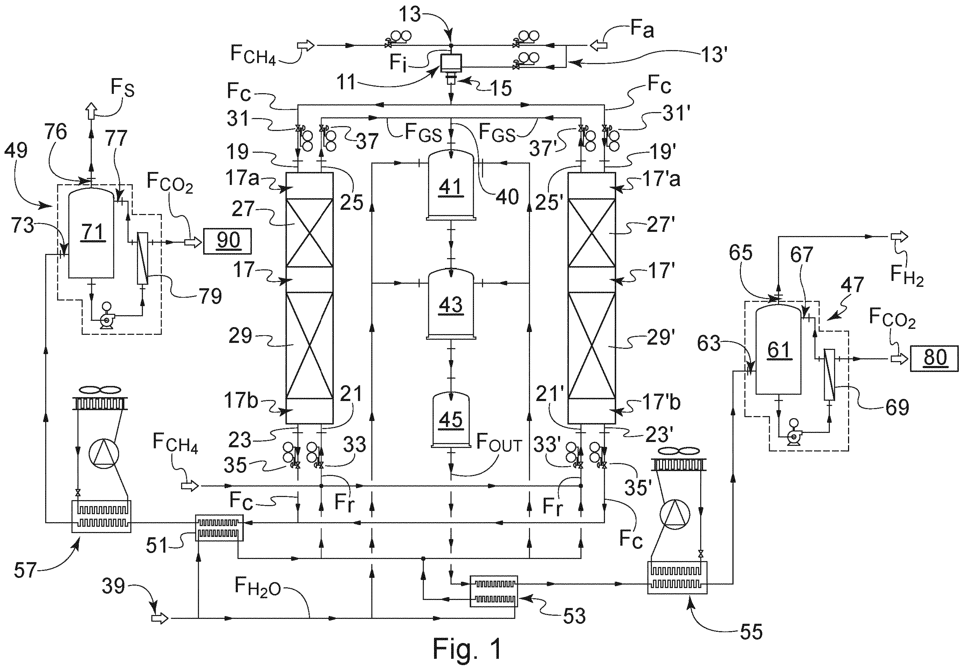

Referring to the annexed Figure 1, this shows a preferred embodiment of the plant for producing hydrogen according to the invention, which has been indicated as a whole with 10.

The plant 10 for producing hydrogen (H2) by reforming a methane-containing feedstock with water vapor according to the invention comprises a combustion unit 11 provided with a corresponding inlet 13 for a mixture of incoming gases Fi, or fuel, and a corresponding outlet 15 for the exit of a heating gas Fc, generated by the combustion unit 11. In the illustrated embodiment, the mixture of incoming gases Fi consists of a methane flow F_{CH4} and an ambient air flow Fa. In addition, in the illustrated embodiment, the combustion unit 11 is provided with a secondary out 13' for introducing a second ambient air flow Fa according to the needs of the process carried out by the plant 10.

The combustion unit 11 comprises at least one burner for the combustion of the mixture of incoming gases Fi in order to produce a heating gas Fc. The heating gas Fc exiting the combustion unit 11 has a temperature between 900°C and 950°C, more preferably of about 910°C.

According to the invention, the plant 10 further comprises at least one reforming reactor 17 comprising at least one catalyst 27 and capable of generating a syngas F_{GS} by absorbing heat from the heating gas Fc.

Advantageously, in the illustrated embodiment, the plant 10 comprises two reforming reactors, namely a first reforming reactor 17 and a second reforming reactor 17', associated in parallel with the outlet 15 of the combustion unit 11, in order to ensure process continuity of the process, i.e. essentially of the reforming reaction in the reactors 17, 17'.

Hereinafter, for ease of description, reference will be made solely to one of the two reforming reactors, in particular to the first reforming reactor indicated with reference numeral 17, for the purpose of describing the technical features thereof, but it is understood that the second reforming reactor 17' also has essentially the same technical features.

In the illustrated embodiment, the reforming reactor 17 has an elongated shape with vertical axis, for example a prism-like shape with a rectangular base. Advantageously, according to the invention, the reforming reactor 17 comprises heat storage means 29 capable of absorbing and storing heat in order to supply calories necessary for the reforming reaction. In the illustrated embodiment, the catalyst 27 is arranged near a first end 17a of the reforming reactor 17 and the heat storage means 29 are arranged near a second end 17b of the reforming reactor 17, whereby the heating gas Fc, when entering the reforming reactor 17, heats first the catalyst 27 and then it heats the heat storage means 29 made of a ceramic material.

The reforming reactor 17 is provided with corresponding inlets 19, 21 for the heating gas Fc coming from the combustion unit 11 and for a flow of reaction gas Fr consisting of a methane-containing feedstock and water vapor necessary for the reforming reaction, respectively. The reforming reactor 17 is further provided with corresponding outlets 23, 25 for the exit of the heating gas Fc and for the exit of a syngas F_{GS} obtained from the reforming reaction, respectively. The syngas exiting the reforming reactor will have a temperature between 850°C and 890°C.

In the illustrated embodiment, the inlets 19, 21 for the heating gas Fc and for the gas flow Fr containing methane and water vapor, respectively, are arranged in a counter-current manner. In particular, the inlet 19 for the heating gas Fc is arranged above, at a first end 17a of the reforming reactor 17 near the outlet 15 of the combustion unit 11 and the inlet 21 for the gas flow Fr containing methane and water vapor is arranged below, at a second end 17b of the reforming reactor 17. In the illustrated embodiment, the water vapor is added into the reforming reactor together with the methane-containing feedstock through the corresponding inlet 21.

In addition, still with reference to the illustrated embodiment, the outlets 23, 25 provided for the exit of the heating gas Fc and for the exit of the syngas F_{GS}, respectively, are also arranged in a counter-current manner. In particular, the outlet 23 for the heating gas Fc is provided at the second end 17b of the reforming reactor 17 and the outlet 25 for the exit of the syngas FGS obtained from the reaction is provided at a first end 17a of the reforming reactor.

Advantageously, according to the invention, the reforming reactor 17 comprises heat storage means 29 made of a ceramic material, which are capable of absorbing and storing heat from the heating gas Fc produced by the combustion unit 11, in order to supply the reforming reactor 17 with the necessary heat for activating the reforming reaction.

In the illustrated embodiment, the heat storage means 29 made of a ceramic material comprise ceramic masses in the form of bricks. In addition, the bricks are micro-perforated in order to allow the passage of gases.

Advantageously, according to the invention, the reforming reactor 17 comprises a reaction temperature control system (not shown), comprising a plurality of temperature sensors associated along a direction of travel of the heating gas Fc in the reforming reactor 17 and a programmable electronic control unit. The electronic control unit is programmed to compare the data detected by said sensors and to control the operation of the combustion unit 11 as well as the introduction of the gas flow Fr consisting of methane and water vapor into the reforming reactor 17.

Thanks to the provision of the temperature control system it is possible to control and maintain the temperature inside the reforming reactor within a certain range, in order to prevent formation of carbon black or coke. The formation of carbon black usually takes place when the temperature inside the reforming reactor exceeds 900°C. Therefore, according to the invention, the reaction temperature is maintained within a range between 850°C e 890°C, preferably it will be about 870°C. At this temperature, transformation of the methane introduced into the reforming reactor 17 takes place and formation of carbon black is prevented.

In the illustrated embodiment, there are provided at least three temperature sensors (not shown) along the direction of travel of the heating gas Fc in the reforming reactor 17. In particular, a first temperature sensor is provided near the first end 17a of the reforming reactor 17, for detecting a temperature of the heating gas Fc entering the reactor 17, which must be around approximately 910°C in order to provide the necessary heat for the reaction. In addition, a second temperature sensor is provided, arranged at approximately two thirds of the length of the heat storage means 29, for detecting the temperature of the ceramic masses provided in the form of bricks, which temperature reaches approximately 850°C. A temperature sensor is further provided near the second end 17b of the reforming reactor, for measuring the temperature provided at the bottom of the reactor, which temperature must be around 150°C. When the temperature values detected by the sensors meet the temperature conditions required for the reforming reaction, the flow of heating gas Fc coming from the combustion unit 11 is stopped by acting onto first control means 31 provided at the first end, or upper end 17b, of the reactor 17, said first control means comprising, in the illustrated embodiment, corresponding valves, and the gas flow Fr containing methane and water vapor is introduced in a counter-current manner by acting onto second control means 33 provided at the second end 17b of the reactor, said second control means also comprising corresponding valves.

The reforming reactors 17, 17' further comprise control means or valves 35, 35' provided at the second end 17b, 17'b for the exit of the heating gas Fc, as well as control means or valves 37, 37' for the exit of the syngas F_{GS} obtained from the reaction.

The plant 10 according to the invention further comprises at least one shift reactor arranged downstream of the reforming reactors 17, 17' and provided in turn with an inlet for the syngas F_{GS} coming from the reforming reactors 17, 17'. The shift reactor 41 comprises at least one catalyst for carrying out a shift or water-gas shift reaction for transforming the syngas F_{GS} into a gaseous mixture containing carbon dioxide and hydrogen.

In the illustrated embodiment, the plant comprises two shift reactors 41, 43 arranged in series downstream of the reforming reactors 17,17', for carrying out a succession of shift or water-gas shift stages or reactions: a first shift reactor 41 comprising a first catalyst based on metals, such as, for example, platinum and cesium, and operating at a temperature of about 400°C, and a second shift reactor 43, arranged in series, downstream of the first shift reactor 41, and comprising a second copper-based catalyst operating at a temperature of about 200°C.

The reaction inside the two shift reactors 41, 43 takes place according to the water-gas shift reaction: CO+H2O=CO2+H2 which is a slightly exothermic reaction.

The plant 10 further comprises cooling means 39 arranged between the reforming reactors 17, 17' and adapted to cool down the syngas F_{GS} exiting the reforming reactors 17, 17', in order to bring it to a temperature suitable for the shift reaction. In the illustrated embodiment, the cooling means 39 comprise a water flow F_{H2O} coming from a plant for water treatment by osmosis. The syngas F_{GS} exiting the reforming reactor 17, 17' has a temperature of about 850°C, whereas a temperature between 200°C and 400 °C is required for carrying out the shift reaction.

In addition, in order to lower the temperature also between the two shift reactors 41, 43, spraying with water F_{H2O} coming from the plant for water treatment by osmosis 39 is used.

In addition, in the illustrated embodiment, the plant 10 comprises a further reactor 45 arranged downstream of the second shift reactor 43 and comprising a catalyst based on metals, such as, for example, platinum and cesium, and operating at a temperature of about 180°C, for removing traces of carbon monoxide left after the shift reaction.

The plant 10 according to the invention further comprises first carbon dioxide separation means 47, arranged downstream of the reactor 45, for extracting the carbon dioxide contained in the mixture F_{OUT} exiting the reactor 45, in order to obtain a hydrogen flow F_{H2} and a carbon dioxide flow F_{CO2}. In the illustrated embodiment, the plant 10 further comprises second carbon dioxide separation means 47 for separating the carbon dioxide contained in the flow of heating gas Fc exiting the reforming reactors 17, 17'.

In the illustrated embodiment, the plant 10 comprises at least two heat exchangers 51 and 53 used for heating and vaporizing the water flow coming from the osmosis plant 39, in order to produce the water vapor to be introduced into the reforming reactors 17, 17' together with the flow F_{CH4} of the methane-containing feedstock.

In the illustrated embodiment, the condensation heat exchanger 51 recovers heat from the flows of heating gas Fc exiting the reactors 17 e 17'. The temperature at the entrance of the heat exchanger 51 will be about 150°C in order to supply the necessary calories for producing water vapor, whereas the temperature at the exit will be about 30°C.

The condensation heat exchanger 53 receives the gas flow F_{OUT} obtained from the succession of shift reactions. The temperature at the entrance of the heat exchanger 53 will be about 180°C, whereas the temperature at the exit will be about 30°C.

Thanks to the fact that the plant 10 comprises the condensation heat exchangers 51 and 53, it will be possible to recover and use all the energy resources of the plant and reduce energy waste while enhancing the energy efficiency of the whole plant 10.

The plant 10 further comprises a series of blast chillers 55, 57 adapted to lower the temperature of the gas flows F_{OUT}, Fc in order to reach a temperature of about 1°C necessary for separating carbon dioxide from said flows.

Advantageously, according to the invention, the separation and liquefaction of carbon dioxide by means of known means 47, 49 takes place both for the gas flow F_{OUT} exiting the shift reaction and for the flow of heating gas Fc exiting the reforming reactors 17, 17', so that the whole amount of carbon dioxide produced during the process carried out by the plant 10 is recovered.

In the illustrated embodiment, the separation means 47 are adapted to recover the carbon dioxide contained in the gas flow F_{OUT} exiting the blast chiller 55. Said separation means comprise a separation module 47 comprising a spraying tower 61 having an inlet 63 for the gas flow F_{OUT} and corresponding outlets 65, 67 for the gas flows F_{H2} and F_{CO2} obtained from separation. The separation means 47 further comprise appropriate extraction membranes 69 for separating carbon dioxide from hydrogen. In the illustrated embodiment, a single separation module 47 is provided, but it is possible to provide more than one separation module, the separation modules being arranged in series, in order to carry out a succession of separation stages.

In the illustrated embodiment, the separation means 49 are adapted to recover the carbon dioxide contained in the flow of heating gas Fc exiting the blast chiller 57. Said separation means comprise a separation module 49 comprising a spraying tower 71 having an inlet 73 for the flow of heating gas Fc exiting the reforming reactors 17, 17' and cooled by the blast chiller 57, and corresponding outlets 75, 77 for the gas flows Fs and F_{CO2} obtained from separation. The separation means 49 further comprise appropriate extraction membranes 79 for separating carbon dioxide in order to obtain a flow of carbon dioxide F_{CO2} and a flow of exhaust gas Fs. In the illustrated embodiment a single separation module 49 is provided, but it is possible to provide more than one separation module, the separation modules being arranged in series, in order to carry out a succession of separation stages.

The plant 10 further comprises liquefaction modules 80,90 for liquefying the gas flows F_{CO2} containing carbon dioxide and obtained at the exit of the separation means 47,49.

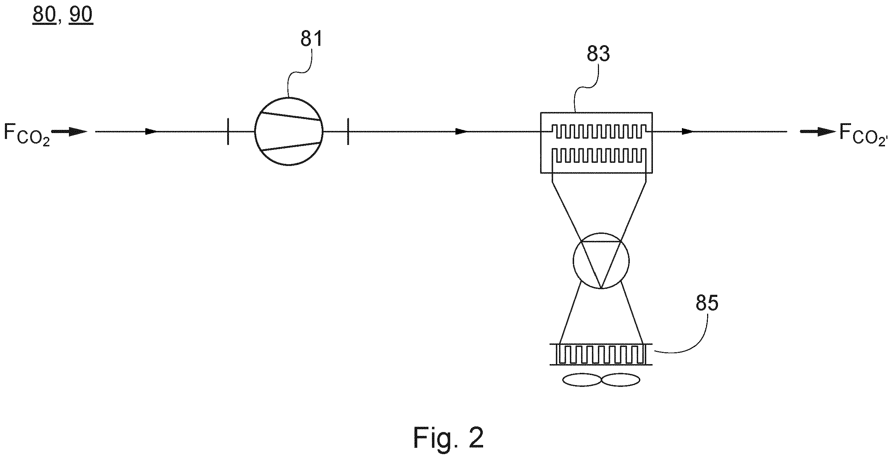

Referring to Fig. 2, the process of liquefaction of the component carbon dioxide F_{CO2} is schematically shown. The flow of carbon dioxide F_{CO2}exiting the separation means 47, 49 has a temperature of about °C and a pressure of 5 bar. The flow of carbon dioxide F_{CO2} is subjected to a first compression step carried out by means of an appropriate compressor 81. The compressor 81 makes it possible to bring the flow of carbon dioxide F_{CO2} to a pressure of about 20 bar. During the compression step, the temperature of the flow of carbon dioxide F_{CO2} rises until reaching a temperature value of essentially 40°C. In order to carry out the liquefaction of the flow of carbon dioxide F_{CO2}, said flow F_{CO2} is subsequently cooled down by means of an appropriate heat exchanger 83 arranged downstream of the compressor 81 and associated with a gas-air exchanger 85 in order to obtain a temperature of about -20°C. At the exit of the heat exchanger 83, liquid carbon dioxide F_{CO2}' is obtained.

According to a preferred embodiment of the invention, the methane-containing feedstock F_{CH4} may be natural gas coming from a public distribution network. Therefore, the plant 10 for producing hydrogen by reforming can be associated with a natural gas distribution network and supply hydrogen directly *in situ*, as a local hydrogen distributor, without the produced hydrogen having to be stored in cylinders or transported. This factor allows avoiding the problems and operating costs caused by storage and transport of hydrogen. In addition, still according to this embodiment, the plant preferably comprises pre-treatment means, arranged upstream of the plant 10, for eliminating the impurities contained in the methane of the network in order to prevent pollution of the catalysts of the plant 10. The pre-treatment means are usually unnecessary when the flow F_{CH4} comprising methane is in the liquid state (LNG).

The pre-treatment means comprise a pre-treatment system based on the use of an appropriate catalyst for removing organic components such as hydrogen sulfide and mercaptans. The pre-treatment system may carry out at least two pre-treatment stages and, to this aim, it comprises two reactors operating at low temperatures: a first reactor provided with an appropriate catalyst for removing mainly hydrogen sulfide and mercaptans, and a second reactor provided with an appropriate zeolite-based catalyst for organic components and bisulfites.

In addition, advantageously, when the flow F_{CH4} comprising methane is in the liquid state (LNG), the plant comprises a system intended for recovering frigories and made with methods and means known to the person skilled in the art, for example by means of a succession of heat exchangers. The frigories recovered from the evaporation of the flow of LNG when passing to the gaseous state in order to be used in the plant 10, are advantageously employed, according to the invention, for liquefying the carbon dioxide obtained from the separation carried out by the separation means 47,49. As described above, with reference to Fig. 2, for carbon dioxide to be liquefied, this must reach a temperature of about -20°C. The frigories recovered from methane in the liquid state LNG supply about two thirds of the energy demand necessary for reaching the temperature of liquefaction of carbon dioxide.

The process for obtaining hydrogen by reforming carried out by the plant according to the invention will be described below.

The process for obtaining hydrogen by reforming by means of the plant 10 according to the invention provides for supplying a gaseous mixture, or fuel, Fi consisting of a methane flow F_{CH4} and an air flow Fa to the combustion unit 11, which is provided with at least one burner to produce a heating gas Fc.

The process provides for introducing the heating gas Fc into a reforming reactor 17,17' associated with the outlet of the combustion unit 11, in order to supply the necessary calories for activating the reforming reaction.

Advantageously, in the illustrated embodiment, the two reforming reactors 17, 17' are arranged in parallel, downstream of the combustion unit 11, and are configured each to carry out at least two operating conditions, which are carried out alternately in order to facilitate continuity of the reforming process. Therefore, the reactors 17, 17' carry out each a first operating configuration, or heating configuration, in which the reactor 17,17' receives the heating gas Fc and heats up by absorbing and storing the heat of the heating gas Fc, and a second operating configuration, or reforming configuration, in which the flow of heating gas Fc is stopped and the reactor 17,17' is fed, in a counter-current manner, with a gas flow Fr containing methane and water vapor for carrying out the reforming reaction.

In particular, in the illustrated embodiment, the first reforming reactor 17 receives the heating gas Fc by acting onto the valve 31. The heating gas flow, when passing through the reactor from the first end 17a to the second end 17b, heats first the catalyst 27, and then heats the ceramic masses 29 made as bricks, and exits the reactor through the outlet 23. In this heating step, by means of the temperature control system equipping the reactor, the temperatures inside the reactor are detected and, when the temperature at two thirds of the ceramic masses 29 reaches approximately 850°C and the temperature at the bottom of the reactor 17 reaches approximately 150°C, the reactor 17 is ready to carry out the reforming reaction and therefore the flow of heating gas Fc coming from the combustion unit 11 can be stopped.

During all this time in which the first reactor is in the first operating configuration, or heating configuration, the second reactor 17' performs the reforming reaction. Thus, for the second reactor 17' the flow of heating gas Fc is stopped and the reactor is fed only from below, i.e. from the second end, with the gas flow Fr containing methane and water vapor by acting onto the valve 33'.

According to this embodiment, between the two operating configurations of each reactor 17,17' there is provided a transient time interval of few seconds for performing a washing, or flushing step, i.e. an operation of removing undesired substances, such as, for example, nitrogen, contained in the heating gas. The flushing operation is carried out by acting onto valves 25, 25' located at the first end 17a, 17'a of each reactor, in order to deflect the syngas F_{GS}, containing hydrogen and carbon monoxide, produced by the reactor that is in the reforming configuration, in the present case the second reactor 17', onto the reactor 17 that has completed the heating step. Each reforming reactor further comprises a device (not shown) located at the second end 17b, 17'b and capable of detecting the absence of nitrogen in the corresponding reactor 17, 17' and stop the flushing step.

Once the reforming reaction has been carried out in either of the reactors 17, 17', as described above, the syngas F_{GS} obtained from the reaction is at a temperature between 850°C e 870°C. The syngas F_{GS} is cooled down by spraying with a water flow F_{H2O} coming from the plant for water treatment by osmosis 39, until causing a decrease in the syngas temperature to about 400°C. After that, the syngas can be sent to the first shift reactor 41 for carrying out a first water-gas shift stage in order to obtain carbon dioxide and hydrogen.

The gas flow obtained after the first water-gas shift stage is cooled down again by spraying with water until it reaches a temperature of about 200°C. When the gas flow has reached this temperature, it is again subjected to a water-gas shift stage in the second shift reactor 43.

After the second shift reaction, the gas flow exiting the second shift reactor 43 is introduced into a further reactor 45 comprising a catalyst operating at a temperature of about 180°C for eliminating the last traces of carbon monoxide.

The flow F_{OUT} exiting the reactor 45 will consist of carbon dioxide and hydrogen. The flow F_{OUT} exiting the reactor 45 is sent to the blast chiller 55 for being cooled down to a temperature of 1°C necessary for separating the carbon dioxide contained in said flow. Carbon dioxide is then separated by using the first separation means 47, in order to obtain a hydrogen flow F_{H2} and a carbon dioxide flow F_{CO2}. The carbon dioxide flow F_{CO2} will be liquefied by means of the corresponding liquefaction module 80 arranged downstream of the separation means 47.

The invention as described and illustrated is susceptible to several variations and modifications, falling within the same inventive principle.

## Claims

1. A plant (10) for producing hydrogen (H2) by reforming a methane-containing feedstock and water vapor, said plant comprising:
- a combustion unit (11) including at least one burner and having an inlet (13) for a mixture of incoming gases (Fi) and an outlet (15) for the exit of a heating gas (Fc) generated by the combustion unit (11);
- a reforming reactor (17, 17') provided with corresponding inlets (19, 21) for said heating gas (Fc) and for a flow of reaction gas (Fr) comprising a methane-containing feedstock and water vapor, respectively, wherein said reactor (17, 17') comprises at least one catalyst (27) capable of generating a syngas (F_{GS}) from said flow of reaction gas (Fr) by absorbing heat from the heating gas (C) and is provided with corresponding outlets (23, 25) for the heating gas (Fc) and the syngas (F_{GS}), respectively;
- cooling means (39, F_{H2O}) capable of cooling down the syngas (F_{GS}) exiting said reforming reactor (17, 17') in order to bring said syngas to a temperature suitable for a subsequent treatment step;
- at least one shift reactor (41) arranged downstream of said reforming reactor (17, 17') and provided in turn with an inlet (40) for said cooled syngas (F_{GS}), said shift reactor (41) comprising a catalyst for transforming said syngas (F_{GS}) into a gas flow (F_{OUT}) containing carbon dioxide and hydrogen;
- first carbon dioxide separation means (47) arranged downstream of the shift reactor (41) for extracting the carbon dioxide contained in said gas flow (F_{OUT}) exiting the shift reactor (41) in order to obtain a hydrogen flow (F_{H2}) and a carbon dioxide flow (F_{CO2}), **characterized in that** said reforming reactor (17, 17') comprises heat storage means (29) made of a ceramic material and capable of absorbing and storing heat from the heating gas (Fc) produced by the combustion unit, in order to supply calories for the reforming reaction taking place in said reforming reactor (17, 17').

2. The plant (10) according to claim 1, wherein said heat storage means (29) comprise ceramic masses in the form of micro-perforated bricks and are arranged at a second end (17b) of said reforming reactor (17, 17').

3. The plant (10) according to claim 1 or 2, comprising second carbon dioxide separation means (49) arranged downstream of the reforming reactor (17, 17') for extracting the carbon dioxide contained in the flow of heating gas (Fc) exiting the reforming reactor (17, 17') in order to obtain a carbon dioxide flow (F_{CO2}) and an exhaust gas flow (Fs).

4. The plant (10) according to any of the preceding claims, wherein said reforming reactor (17, 17') comprises a temperature control system including a plurality of temperature sensors arranged along the direction of travel of the heating gas (Fc) in the reactor (17, 17'), and an electronic control unit programmed to compare the temperature values detected by said sensors and control the operation of said combustion unit (11) as well as to regulate the gas flows (Fc, Fr) entering the reforming reactor (17, 17') in accordance with said values.

5. The plant (10) according to any of the preceding claims, wherein said plant comprises two reforming reactors (17, 17') arranged in parallel downstream of the combustion unit (11), wherein said reactors (17, 17') can each take at least two working configurations:
- a first, heating configuration, in which the reactor (17,17') receives from the combustion unit (11) the heating gas (Fc), which flows through the reactor from a first end (17a) towards a second end (17b) and heats said reactor;
- a second, reforming configuration, in which the reactor (17,17') receives the flow of reaction gas (Fr) comprising a methane-containing feedstock and water vapor in a counter-current manner and carries out the reforming reaction to obtain the syngas (F_{GS}).

6. The plant (10) according to claim 5, wherein said reforming reactors (17, 17') are configured to operate the two working conditions in an alternate manner in order to guarantee continuity of the reforming reaction.

7. The plant (10) according to any of the preceding claims, comprising two shift reactors (41, 43) associated in series downstream of said reforming reactors (17, 17') and capable of carrying out a succession of shift reactions to obtain a flow of exiting gas (F_{OUT}) containing hydrogen and carbon dioxide.

8. The plant (10) according to any of the preceding claims, wherein said cooling means (39) for cooling down the syngas exiting the reforming reactor (17, 17') comprise a plant for water treatment by osmosis for cooling down the syngas (F_{GS}) by spraying said gas with a water flow (F_{H2O}).

9. A process for producing hydrogen by reforming starting from a methane-containing feedstock and water vapor, said process comprising the steps of:
- providing a plant as claimed in claims 1-8;
- supplying a mixture of incoming gases (Fi) to a combustion unit (11) having at least one burner in order to produce a heating gas (Fc);
- introducing said heating gas (Fc) into at least one reforming reactor (17, 17') associated with the outlet (15) of the combustion unit (11) in order to obtain the heating required to activate the reforming reaction in said reforming reactor;
- introducing a flow of reaction gas (Fr) comprising a methane-containing feedstock and water vapor into said reforming reactor (17, 17') and reacting said flow (Fr) in order to obtain a syngas (F_{GS});
- cooling down said syngas (F_{GS}) to bring it to a temperature suitable for introduction into at least one shift reactor (41) capable of causing a shift or water-gas shift reaction;
- subjecting the syngas (F_{GS}) to at least one stage of a water-gas shift reaction inside the shift reactor (41) in order to transform the syngas into a gas flow (F_{OUT}) containing carbon dioxide and hydrogen;
- extracting, by means of carbon dioxide separation means (47), the carbon dioxide (F_{CO2}) from the gas flow (F_{OUT}) obtained from the shift reaction, in order to obtain a hydrogen flow (F_{H2}) and a carbon dioxide flow (Fco2);
**characterized in that** it comprises a step of absorbing and storing, by means of storage means (29) which are made of a ceramic material and with which the reforming reactor (17,17') is provided, the heat taken from the heating gas (Fc), and a step of controlling the reforming reaction temperature by means of a temperature control system associated with the reforming reactor (17, 17').

10. The process according to claim 9, wherein the plant (10) comprises at least two reforming reactors (17, 17') arranged in parallel and capable each of taking at least two working configurations, namely a first, heating configuration and a second, reforming configuration, and wherein between the two working configurations there is provided a washing step for eliminating, from the reforming reactors (17, 17'), the traces of impurities that have accumulated in the preceding working step.
